# EUROPÄISCHE PATENTSCHRIFT

(11) **EP 1 969 213 B1**
(45) Veröffentlichungstag und Bekanntmachung des Hinweises auf die Patenterteilung: **26.10.2011**
(21) Anmeldenummer: 06819540.3
(22) Anmeldetag: 16.11.2006
(51) Int. Cl.: F01N 3/20

(54) **EINBAUTEIL ZUR MONTAGE IN EINEM ABGASSTRANG EINER VERBRENNUNGSKRAFTMASCHINE**
FIXTURE FOR MOUNTING IN AN EXHAUST LINE OF AN INTERNAL COMBUSTION ENGINE
COMPOSANT DESTINE A ETRE MONTE DANS LE PARCOURS DES GAZ D'ECHAPPEMENT D'UN MOTEUR A COMBUSTION INTERNE

(30) Priorität: 29.12.2005 DE 102005063081
(43) Veröffentlichungstag der Anmeldung: 17.09.2008
(73) Patentinhaber: Robert Bosch GmbH, 70442 Stuttgart (DE)
(72) Erfinder: RIPPER, Wolfgang, 70327 Stuttgart (DE); LUEDERS, Hartmut, 71720 Oberstenfeld (DE); MEINGAST, Ulrich, 70499 Stuttgart (DE)
(86) Internationale Anmeldenummer: PCT/EP2006/068561
(87) Internationale Veröffentlichungsnummer: WO 2007/080018

(56) Entgegenhaltungen:
- EP-A1- 0 537 968
- EP-A1- 0 713 563
- EP-A1- 1 338 562
- WO-A1-2005/073526
- DE-A1- 19 934 413
- US-A1- 2003 070 424

## Beschreibung

Die Erfindung betrifft ein Einbauteil zur Montage in einem Abgasstrang einer Verbrennungskraftmaschine.

### Stand der Technik

Bei der selektiven katalytischen Reduktion oder SCR (Selective Catalytic Reduction) wird zur Verminderung des Stickoxidanteils im Abgas von Dieselmotoren eine Harnstoff-Wasser-Lösung in den Abgasstrang zudosiert. Der Harnstoff der eingedüsten Lösung wird im Abgasstrang selbst oder in einem ggf. im Abgasstrang angeordneten Hydrolysekatalysator zu Ammoniak (NH₃) umgesetzt, das die im Abgas enthaltenen Stickoxide (NOₓ) in einem nachgeschalteten SCR-Katalysator unter Bildung von Stickstoff (N₂) und Wasser (H₂O) reduziert. Da die Stickoxide (NOₓ) auf diese Weise nahezu vollständig aus dem Abgas entfernt werden können, lassen sich Dieselmotoren mit einem relativ mageren Gemisch betreiben, was einen kraftstoffsparenden Betrieb der Dieselmotoren ermöglicht. An Stelle einer Harnstoff-Wasser-Lösung können ggf. auch andere Ammoniak- oder Reduktionsmittel-Vorläufer zudosiert werden, aus denen unter den Bedingungen im Abgasstrang gasförmiges Ammoniak (NH₃) oder ein anderes zur Reduktion von Stickoxiden geeignetes Reduktionsmittel entsteht.

Um das gewünschte Ziel zu erreichen, ist jedoch eine homogene Verteilung des Reduktionsmittels im Abgas von großer Bedeutung. Wenn das Reduktionsmittel beim Eintritt in den SCR-Katalysator in Form von sogenannten "Stromfäden" ungleichmäßig im Abgas verteilt ist, wird der SCR-Katalysator nicht gleichmäßig mit dem Reduktionsmittel beaufschlagt, so dass es an einigen Stellen zu einem Reduktionsmitteldefizit und an anderen Stellen zu einem Reduktionsmittelüberschuss kommen kann. Dies führt an den zuerst genannten Stellen zu einer unvollständigen Umsetzung der Stickoxide (NOₓ), während Ammoniak als Reduktionsmittel an den zuletzt genannten Stellen zum Auftreten von Ammoniakschlupf führen kann, das heißt zu einem Hindurchtritt des Ammoniaks durch den SCR-Katalysator und zu einem Austritt durch des Auspuff, was eine Geruchsbelästigung zur Folge hat.

In der europäischen Offenlegungsschrift EP 0 537 968 A1 ist ein Einbauteil zur Montage in einem Abgasstrang einer Verbrennungskraftmaschine bekannt, das ein Rohrstück umfasst, welches an beiden seiner Stirnenden mit jeweils einem Verbindungsflansch versehen ist. Durch die Mantelwand des Rohrstücks ist eine Einspritzdüse geführt, durch welche ein Abgasnachbehandlungsmittel in das Rohrstück und damit in den Abgasstrang einbringbar ist.

### Vorteile der Erfindung

Die erfindungsgemäße Lösung bietet demgegenüber den Vorteil, dass sie es ermöglicht, mit dem Bauteil mit den im Anspruch 1 genannten Merkmalen eine kompakte Funktionseinheit im Abgasstrang vor dem SCR-Katalysator zu montieren, die nicht nur eine genaue Zudosierung des Reduktionsmittel-Vorläufers, wie der Harnstoff-Wasser-Lösung, gestattet, sondern darüber hinaus auch eine Integration der Gemischaufbereitung, d.h. eine Vergasung oder Verdampfung des Reduktionsmittel-Vorläufers, dessen homogene Vermischung mit dem Abgas und eine vollständige Umsetzung zum Reduktionsmittel innerhalb der Einheit ermöglicht. Um unabhängig von den stromaufwärts vom Einbauteil herrschenden Bedingungen im Bereich der Zudosierung des Reduktionsmittel-Vorläufers und des Verdampfers für eine homogene Abgasströmung und eine gleichförmige Strömungsgeschwindigkeit des Abgases über den gesamten Rohrquerschnitt zu sorgen, ist zwischen dem stromaufwärtigen Stirnende des Rohrstücks und dem Dosiermodul ein Strömungsgleichrichter vorgesehen.

Vorzugsweise wird der Reduktionsmittel-Vorläufer in Form eines feinen Sprühnebels in den Abgasstrahl zugeführt, so dass er sich bereits beim Zudosieren möglichst gleichmäßig im Abgas verteilt. Die Verteilung des zudosierten Reduktionsmittel-Vorläufers im Abgas und die anschließende Vermischung des Reduktionsmittel-Vorläufers bzw. des daraus gebildeten Reduktionsmittels mit dem Abgas kann dadurch verbessert werden, dass gemäß einer bevorzugten Ausgestaltung der Erfindung stromabwärts vom Dosiermodul ein statischer Mischer im Rohrstück angeordnet ist, der durch Umlenkung und Verwirbelung des Abgasstroms für eine bessere Durchmischung des Abgases und des darin enthaltenen Reduktionsmittels sorgt. Dies ermöglicht eine gleichmäßigere Beaufschlagung des stromabwärts vom Rohrstück angeordneten SCR-Katalysators mit Abgas und mit dem aus dem Reduktionsmittel-Vorläufer entstandenen Reduktionsmittel.

Um für eine bessere Zerstäubung und schnellere Verdampfung des zudosierten Reduktionsmittel-Vorläufers zu sorgen, ist in bevorzugter Ausgestaltung der Erfindung in Strömungsrichtung zwischen dem Dosiermodul und dem stromabwärtigen Stirnende des Rohrstücks und vorzugsweise im Bewegungsweg des zudosierten Reduktionsmittel-Vorläufers ein Oberflächenverdampfer vorgesehen, dessen Oberfläche zweckmäßig gleichzeitig als Prallfläche für den Reduktionsmittel-Vorläufer dient.

Der Oberflächenverdampfer kann zusätzlich zum statischen Mischer vorgesehen sein, jedoch kann alternativ der Reduktionsmittel-Vorläufer zur Zerstäubung und Verdampfung auch direkt auf den statischen Mischer gesprüht werden.

Da die Abgastemperaturen von Dieselmotoren bei einigen Betriebspunkten unterhalb von 250°C und damit bei Temperaturen liegen, bei denen im Falle einer Verwendung einer Harnstoff-Wasser-Lösung als Reduktionsmittel-Vorläufer eine vollständige Umsetzung des Harnstoffs zu gasförmigem Ammoniak nicht immer sichergestellt ist, kann der Oberflächenverdampfer und/oder der statische Mischer vorteilhaft auch dazu verwendet werden, die Temperatur der zudosierten Harnstoff-Wasser-Lösung anzuheben, um die Verdampfung des in der Harnstoff-Wasser-Lösung enthaltenen Wassers zu beschleunigen. Zu diesem Zweck kann der Oberflächenverdampfer und/oder der statische Mischer vorteilhaft beheizbar sein, um seine bzw. ihre Temperatur auf einen Wert von über 250°C anzuheben. Die Beheizung des Oberflächenverdampfers und/oder des statischen Mischers erfolgt vorzugsweise durch eine Widerstandsheizung, indem zumindest ein Teil des Oberflächenverdampfers und/oder des statischen Mischers aus einem elektrisch leitfähigen Material hergestellt und gegenüber der Umfangswand des Rohrstücks isoliert wird, so dass zumindest in Betriebspunkten mit geringer Abgastemperatur durch Stromzufuhr zum elektrisch leitfähigen Material die Temperatur an dessen Oberfläche erhöht und damit die Verdampfung der Harnstoff-Wasser-Lösung und die Umsetzung des Harnstoffs beschleunigt werden kann.

Ähnliche Ergebnisse wie durch eine Erhöhung der Oberflächentemperatur können alternativ auch dadurch erreicht werden, dass man den Oberflächenverdampfer und/oder den statischen Mischer mit einer geeigneten katalytischen Beschichtung versieht, die bei den im Abgasstrang herrschenden Temperaturen eine vollständige Umsetzung von Harnstoff durch Hydrolyse in seine Folgeprodukte sicherstellt.

Durch die zuvor genannten Maßnahmen können auch Ablagerungen von Harnstoff auf der Umfangswand des Rohrstücks, dem Oberflächenverdampfer und/oder dem statischen Mischer und damit eine unerwünschte Speicherung von Ammoniak-Vorläufer in derartigen Ablagerungen vermieden werden.

Der Strömungsgleichrichter wird vorzugsweise ebenso wie der Oberflächenverdampfer von einem in das Rohrstück eingesetzten wabenartigen Körper gebildet, der eine Vielzahl von parallelen Durchtrittsöffnungen aufweist. Dies führt im Strömungsgleichrichter zu einer Begradigung der Abgasströmung und zu einer Vergleichmäßigung ihrer Strömungsgeschwindigkeit über den gesamten Rohrquerschnitt, während im kürzeren Oberflächenverdampfer eine große Oberfläche als Prallfläche zur Zerstäubung des zudosierten Reduktionsmittel-Vorläufers bereit gestellt wird.

Das Rohrstück ist vorzugsweise an beiden Stirnenden mit Schraubflanschen versehen, kann jedoch auch mit Klemmflanschen versehen oder mit benachbarten Rohrabschnitten des Abgasstrangs verschweißt werden.

### Zeichnung

Die Erfindung wird nachfolgend in einem Ausführungsbeispiel anhand der zugehörigen Zeichnungen näher erläutert. Es zeigen:
- Fig. 1: eine Längsschnittansicht eines Einbauteils mit einem Dosiermodul, einem Strömungsgleichrichter, einem Verdampfer und einem statischen Mischer zum Einbau in einen Abgasstrang eines Kraftfahrzeug-Dieselmotors;
- Fig. 2: verschiedene Querschnittsansichten des Einbauteils entlang der Linie A-A oder B-B aus Fig. 1, die Strömungsgleichrichter bzw. Verdampfer mit unterschiedlich großen Durchtrittsöffnungen zeigen;
- Fig. 3: eine perspektivische Ansicht eines stromabwärtigen Stirnflanschs des Einbauteils mit dem statischen Mischer.

### Beschreibung des Ausführungsbeispiels

Das in der Zeichnung dargestellte Einbauteil 2 ist zur Montage in einem vom Abgas eines Dieselmotors durchströmten Abgasrohr eines Kraftfahrzeugs (nicht dargestellt) bestimmt, und zwar stromaufwärts von einem SCR-Katalysator des Kraftfahrzeugs, in dem im Abgas enthaltene Stickoxide (NOₓ) durch Umsetzung mit Ammoniak (NH₃) unter Bildung von Stickstoff (N₂) und Wasser (H₂O) reduziert werden.

Das Einbauteil 2 dient dazu, erstens eine Harnstoff-Wasser-Lösung als Vorläufer für das zur Reduktion der Stickoxide (NOₓ) im Katalysator benötigte Ammoniak (NH₃) stromaufwärts vom Katalysator gleichförmig in das Abgas zuzudosieren, zweitens die Zerstäubung und Verdampfung der Harnstoff-Wasser-Lösung und deren Umsetzung zu Ammoniak zu unterstützen bzw. beschleunigen, und drittens das erzeugte Ammoniak gleichförmig im Abgasstrom zu verteilen.

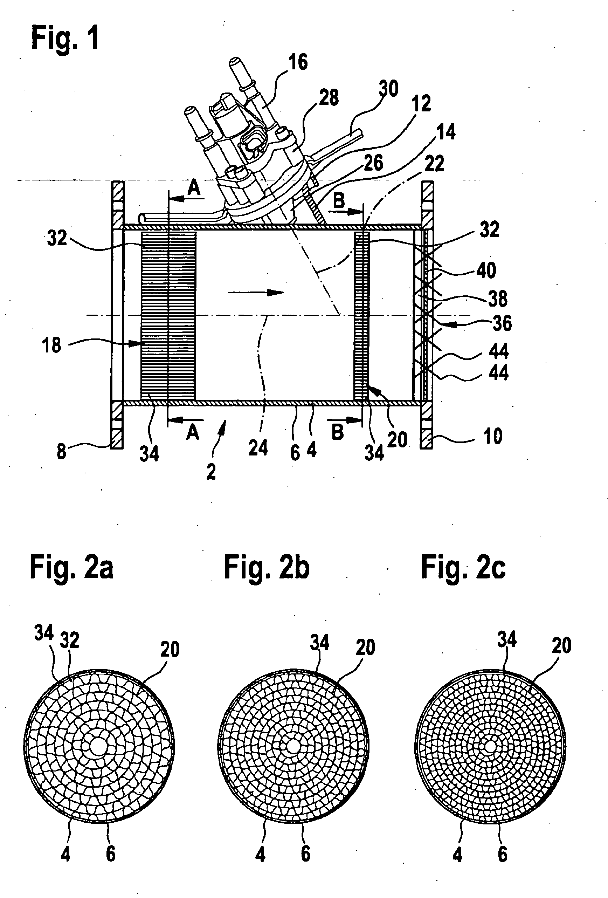

Das in Fig. 1 dargestellte Einbauteil 2 besteht im Wesentlichen aus einem Rohrstück 4 mit einer zylindrischen Umfangswand 6, deren Innendurchmesser dem Innendurchmesser des Abgasrohrs entspricht, jeweils einem Schraubflansch 8, 10 an den beiden entgegengesetzten Stirnenden des Rohrstücks 4, einem zwischen den Schraubflanschen 8, 10 auf einem Anschlussflansch 12 eines Rohrstutzens 14 auf der Außenseite des Rohrstücks 4 angebrachten Dosiermodul 16 zum dosierten Einspritzen der Harnstoff-Wasser-Lösung ins Innere des Rohrstücks 4, einem stromaufwärts vom Dosiermodul 16 in der Nähe des Schraubflanschs 8 ins Innere des Rohrstücks 4 eingesetzten Strömungsgleichrichter 18, einem stromabwärts vom Dosiermodul 15 ins Innere des Rohrstücks 4 eingesetzten Oberflächenverdampfer 20 sowie einen im Bereich des Schraubflanschs 10 ins Innere des Rohrstücks 4 eingesetzten statischen Mischer 36.

Die beiden Schraubflansche 8, 10 ermöglichen eine schnelle Montage des Einbauteils 2 in einer von komplementären Schraubflanschen (nicht dargestellt) begrenzten Unterbrechung des Abgasrohrs, deren Länge der Länge des Rohrstücks 4 entspricht.

Der Rohrstutzen 14 zur Anbringung des Dosiermoduls 16 weist eine Achse 22 auf, die in Bezug zur Längsachse 24 des Rohrstücks 4 unter einem Winkel von 20 bis 60 Grad geneigt ist, so dass ein mittels des Dosiermoduls 16 in das Rohrstück 4 zugeführter Sprühnebel unter einem flachen Winkel zur Strömungsrichtung des Abgases in das Rohrstück 4 eintritt und auf den Oberflächenverdampfer 20 trifft.

Das Dosiermodul 16 besteht im Wesentlichen aus einem mit der Harnstoff-Wasser-Lösung beaufschlagbaren Einspritzventil (nicht sichtbar), ggf. einer in den Rohrstutzen 14 ragenden Sprühdüse 26, sowie einem zur Befestigung des Dosiermoduls 16 auf dem Anschlussflansch 12 dienenden Ventilhalter 28. Das Dosiermodul 16 umfasst weiter einen zwischen den Ventilhalter 28 und den Anschlussflansch 12 des Rohrstutzens 14 eingesetzten, allseitig über den Rohrstutzen 14 überstehenden Hitzeschild 30, der die jenseits des Anschlussflanschs 12 angeordneten Komponenten des Dosiermoduls 16 vor der vom Abgasrohr bzw. vom Rohrstück 4 abgestrahlten Wärme schützt. An der stromaufwärtigen Seite des Rohrstücks 4 ist der Hitzeschild 30 aus Platzgründen so umgebogen, dass er gegen die zylindrische Umfangswand 6 des Rohrstücks 4 anliegt.

Der Strömungsgleichrichter 18 in der Nähe des stromaufwärtigen Stirnendes des Rohrstücks 4 dient zur Homogenisierung des in das Rohrstück 4 einströmenden Abgases über den gesamten Strömungs- bzw. Rohrquerschnitt unabhängig von den stromaufwärts vom Rohrstück 4 herrschenden Bedingungen.

Der Strömungsgleichrichter 18 weist dazu eine Vielzahl von kleinen Durchtrittsöffnungen 32 auf, die parallel zur Langsachse 24 des Rohrstücks 4 ausgerichtet sind, im Wesentlichen denselben Strömungsquerschnitt bzw. denselben Strömungswiderstand aufweisen und sämtlich vom Abgas durchströmt werden, so dass dessen Strömungsgeschwindigkeit über den gesamten Innenquerschnitt des Rohrstücks 4 vergleichmäßigt wird.

Wie am besten in Fig. 2 dargestellt, besteht der Strömungsgleichrichter 18 aus einem in das Rohrstück 4 eingesetzten wabenartigen zylindrischen Körper 34, der sich über den gesamten Innenquerschnitt des Rohrstücks 4 erstreckt. Der Körper 34 ist beispielsweise aus gewelltem Stahlblech hergestellt, das spiralförmig zu einem Zylinder gewickelt ist, wobei benachbarte Wicklungen ggf. miteinander verschweißt oder verlötet sind. Wie ebenfalls in Fig. 2 dargestellt ist, kann der Strömungsquerschnitt der Durchtrittsöffnungen 32 durch Veränderung der Höhe und des Abstands der Scheitel des Wellblechs nach Bedarf variiert werden.

Der Oberflächenverdampfer 20 dient dazu, die Zerstäubung eines aus dem Dosiermodul 16 ins Innere des Rohrstücks 4 ausgestoßenen Sprühstrahl oder Sprühnebel der Harnstoff-Wasser-Lösung in kleinere Tröpfchen zu verbessern und damit die Verdampfung des Wasseranteils der Harnstoff-Wasser-Lösung zu beschleunigen. Der Oberflächenverdampfer 20 ist zweckmäßig im Bewegungsweg des aus dem Dosiermodul 16 austretenden Sprühstrahls oder Sprühnebels angeordnet und weist eine ähnlichen Querschnitt wie der Strömungsgleichrichter-18 auf, so dass er große Prallflächen für den Sprühstrahl oder Sprühnebel bietet, kann jedoch kürzer als der Strömungsgleichrichter 18 sein, wie in Fig. 1 dargestellt.

Die vom Abgas aufgeheizte große Oberfläche des zylindrischen Körpers 34 trägt ebenfalls dazu bei, die Verdampfung des Wasseranteils der zerstäubten Harnstoff-Wasser-Lösung zu beschleunigen. Darüber hinaus kann der zylindrische Körpers 34 durch eine zuvor auf die Oberflächen des Wellblechs aufgebrachte katalytischen Beschichtung nach seinem Einsetzen in das Rohrstück 4 als HydrolyseKatalysator wirken, der nach dem Verdampfen des Wasseranteils der Harnstoff-Wasser-Lösung für eine katalytische Umsetzung des zurückbleibenden Harnstoffs zu Ammoniak (NH₃) sorgt.

Der am stromabwärtigen Stimende des Rohrstücks 4 vorgesehene statische Mischer 36 dient dazu, den beim Verdampfen des Wasseranteils der Harnstoff-Wasser-Lösung zurückbleibenden Harnstoff bzw. das durch Hydrolyse aus dem Harnstoff gebildete gasförmige Ammoniak (NH₃) homogen mit dem Abgas zu vermischen. Wenn, wie in Figur 1 dargestellt, der Mischer 36 und der Oberflächenverdampfer 20 verwendet werden, ist es im Rahmen der Erfindung auch möglich, diese zu miteinander zu vertauschen.

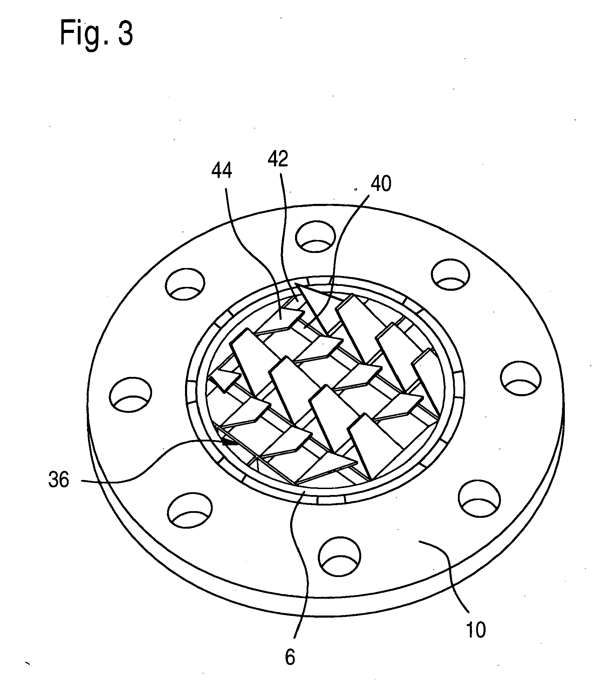

Wie am besten in Fig. 3 dargestellt, weist der Mischer 36 dazu ein im Bereich des Schraubflanschs 10 ins Innere des Rohrstücks 4 eingesetztes Gitter 38 mit zwei Scharen von orthogonalen Gitterstegen 40, 42 und von den Gitterstegen 40 getragenen Leitschaufeln 44 auf. Die Leitschaufeln 44 sind unter einem Anstellwinkel zur Strömungsrichtung des Abgases (Pfeil in Fig. 1) geneigt, wobei sie reihenweise entgegengesetzte Neigungsrichtungen besitzen. Die dadurch hervorgerufene Verwirbelung des Abgasstroms sorgt für eine homogene Durchmischung des Harnstoffs bzw. des daraus erzeugten gasförmigen Ammoniaks mit dem Abgas und damit auch für eine gleichmäßige Beaufschlagung des SCR-Katalysators mit Ammoniak.

Um die Verdampfung des Wasseranteils aus der Harnstoff-Wasser-Lösung zu beschleunigen und die für eine Hydrolyse des Harnstoffs erforderliche Temperatur von etwa 250°C im Abgasstrom auch bei Betriebspunkten des Dieselmotors mit niedrigerer Abgastemperatur zu erreichen, kann der Oberflächenverdampfer 20 oder der Mischers 36 beheizbar sein. Im zuerst genannten Fall kann der Körper 34 des Oberflächenverdampfers 20 aus zwei gegeneinander und gegen die Umfangswand 6 des Rohrstücks 4 isolierten Blechwicklungen hergestellt werden, während im zuletzt genannten Fall die Gitterstege 40 des Mischers 36 zusammen mit den Leitschaufeln 44 gegenüber der Umfangswand 6 des Rohrstücks 4 und gegenüber den Gitterstegen 42 elektrisch isoliert werden können, wobei die elektrisch isolierten Blechwicklungen bzw. Gitterstege 40 im Falle einer Nachbehandlung der Abgase eines Dieselmotors eines Fahrzeugs in Reihenschaltung über einen Regler (nicht dargestellt) mit der Fahrzeugbatterie verbunden werden. Der Regler steuert die Stromzufuhr zu den Blechwicklungen bzw. Gitterstegen 40 in Abhängigkeit von der Abgastemperatur, die von einem Temperatursensor (nicht dargestellt) gemessen wird.

## Patentansprüche

1. Einbauteil zur Montage in einem Abgasstrang einer Verbrennungskraftmaschine, mit einem an beiden Stirnenden mit Verbindungsflanschen versehenen Rohrstück, **gekennzeichnet durch** ein auf der Außenseite des Rohrstücks (4) montiertes Dosiermoduls (16) zum Zudosieren eines Reduktionsmittel-Vorläufers in das Rohrstück (4), wobei ein Strömungsgleichrichter (18) zwischen dem Dosiermodul (16) und dem stromaufwärtigen Stirnende des Rohrstücks (4) angeordnet ist.

2. Einbauteil nach Anspruch 1, **gekennzeichnet durch** einen zwischen dem Dosiermodul (16) und dem stromabwärtigen Stirnende des Rohrstücks (4) angeordneten Oberflächenverdampfer (20).

3. Einbauteil nach Anspruch 2, **dadurch gekennzeichnet, dass** der Oberflächenverdampfer (20) im Bewegungsweg des zudosierten Reduktionsmittel-Vorläufers angeordnet ist.

4. Einbauteil nach einem der Ansprüche 2 und 3, **dadurch gekennzeichnet, dass** der Oberflächenverdampfer (20) und/oder der Strömungsgleichrichter (18) einen wabenartigen Körper (34) mit einer Vielzahl von beidseitig offenen Durchtrittsöffnungen (32) umfasst.

5. Einbauteil nach einem der vorangehenden Ansprüche, **gekennzeichnet durch** einen zwischen dem Dosiermodul (16) und dem stromabwärtigen Stirnende des Rohrstücks (4) angeordneten statischen Mischer (36).

6. Einbauteil nach einem der Ansprüche 2 bis 5, **dadurch gekennzeichnet, dass** der Oberflächenverdampfer (20) und/oder der Mischer (36) mindestens teilweise beheizbar ist.

7. Einbauteil nach Anspruch 6, **dadurch gekennzeichnet, dass** der Oberflächenverdampfer (20) und/oder der Mischer (36) durch eine Widerstandsheizung beheizbar ist.

8. Einbauteil nach einem der Ansprüche 2 bis 7, **dadurch gekennzeichnet, dass** der Oberflächenverdampfer (20) und/oder der Mischer (36) mindestens teilweise mit einer katalytischen Beschichtung versehen sind.

9. Einbauteil nach einem der vorangehenden Ansprüche, **dadurch gekennzeichnet, dass** das Dosiermodul (16) ein Einspritzventil, eine Sprühdüse (26), und einen Ventilhalter (28) zur Befestigung des Dosiermoduls (16) auf dem Rohrstück (4) umfasst.

10. Einbauteil nach einem der vorangehenden Ansprüche, **dadurch gekennzeichnet, dass** das Dosiermodul (16) einen Hitzeschild (30) umfasst.

## Claims

1. Fixture for mounting in an exhaust line of an internal combustion engine, having a pipe piece provided with connecting flanges on both end sides, **characterized by** a dosing module (16), which is mounted on the outside of the pipe piece (4), for dosing a reducing agent precursor into the pipe piece (4), wherein a flow straightener (18) is arranged between the dosing module (16) and the upstream end side of the pipe piece (4).

2. Fixture according to Claim 1, **characterized by** a surface evaporator (20) arranged between the dosing module (16) and the downstream end side of the pipe piece (4).

3. Fixture according to Claim 2, **characterized in that** the surface evaporator (20) is arranged in the movement path of the dosed reducing agent precursor.

4. Fixture according to either of Claims 2 and 3, **characterized in that** the surface evaporator (20) and/or the flow straightener (18) comprises a honeycomb-like body (34) with a multiplicity of passage openings (32) which are open on both sides.

5. Fixture according to one of the preceding claims, **characterized by** a static mixer (36) arranged between the dosing module (16) and the downstream end side of the pipe piece (4).

6. Fixture according to one of Claims 2 to 5, **characterized in that** the surface evaporator (20) and/or the mixer (36) can at least partially be heated.

7. Fixture according to Claim 6, **characterized in that** the surface evaporator (20) and/or the mixer (36) can be heated by means of a resistance heater.

8. Fixture according to one of Claims 2 to 7, **characterized in that** the surface evaporator (20) and/or the mixer (36) are/is at least partially provided with a catalytic coating.

9. Fixture according to one of the preceding claims, **characterized in that** the dosing module (16) comprises an injection valve, a spray nozzle (26), and a valve holder (28) for fastening the dosing module (16) to the pipe piece (4).

10. Fixture according to one of the preceding claims, **characterized in that** the dosing module (16) comprises a heat shield (30).

## Revendications

1. Composant destiné à être monté dans le parcours des gaz d'échappement d'un moteur à combustion interne, comprenant une pièce tubulaire pourvue aux deux extrémités frontales de brides de connexion, **caractérisé par** un module de dosage (16) monté sur le côté extérieur de la pièce tubulaire (4) pour l'ajout par dosage d'un précurseur d'agent réducteur dans la pièce tubulaire (4), un redresseur d'écoulement (18) étant disposé entre le module de dosage (16) et l'extrémité frontale amont de la pièce tubulaire (4).

2. Composant selon la revendication 1, **caractérisé par** un évaporateur de surface (20) disposé entre le module de dosage (16) et l'extérieur frontale aval de la pièce tubulaire (4).

3. Composant selon la revendication 2, **caractérisé en ce que** l'évaporateur de surface (20) est disposé dans le parcours de déplacement du précurseur d'agent réducteur ajouté par dosage.

4. Composant selon l'une quelconque des revendications 2 et 3, **caractérisé en ce que** l'évaporateur de surface (20) et/ou le redresseur d'écoulement (18) comprennent un corps en nid d'abeilles (34) avec une pluralité d'ouvertures de passage (32) ouvertes des deux côtés.

5. Composant selon l'une quelconque des revendications précédentes, **caractérisé par** un mélangeur statique (36) disposé entre le module de dosage (16) et l'extrémité frontale aval de la pièce tubulaire (4).

6. Composant selon l'une quelconque des revendications 2 à 5, **caractérisé en ce que** l'évaporateur de surface (20) et/ou le mélangeur (36) peuvent être au moins partiellement chauffables.

7. Composant selon la revendication 6, **caractérisé en ce que** l'évaporateur de surface (20) et/ou le mélangeur (36) peuvent être chauffé par un chauffage à résistance.

8. Composant selon l'une quelconque des revendications 2 à 7, **caractérisé en ce que** l'évaporateur de surface (20) et/ou le mélangeur (36) sont pourvus au moins en partie d'un revêtement catalytique.

9. Composant selon l'une quelconque des revendications précédentes, **caractérisé en ce que** le module de dosage (16) comprend une soupape d'injection, une buse de pulvérisation (26) et un support de soupape (28) pour la fixation du module de dosage (16) sur la pièce tubulaire (4).

10. Composant selon l'une quelconque des revendications précédentes, **caractérisé en ce que** le module de dosage (16) comprend un bouclier thermique (30).
